# DEMANDE DE BREVET EUROPEEN

(11) **EP 0 619 474 A1**
(43) Date de publication de la demande: **12.10.1994**
(21) Numéro de dépôt: 94470008.7
(22) Date de dépôt: 01.04.1994
(51) Int. Cl.: G01F 5/00, E03B 7/07, E03B 9/00, G01F 1/42

(54) **Dispositif de montage d'un diaphragme dans un élément de conduite d'adduction d'eau, notamment en vue de la pose d'un compteur de débit**

(30) Priorité: 08.04.1993 FR 9304199
(71) Demandeur: PONT-A-MOUSSON S.A., F-54000 Nancy (FR)
(72) Inventeur: Zinsius, Joseph, F-54700 Pont-A-Mousson (FR)
(74) Mandataire: Puit, Thierry

(57) **Abrégé**

Dispositif de montage d'un diaphragme (7) dans un élément de conduite d'adduction d'eau (1), caractérisé en ce qu'il comporte une collerette intérieure (6) de réception du diaphragme (7) ménagée à l'intérieur de l'élément de conduite, le diaphragme étant pourvu d'un rebord périphérique (9) d'appui contre la collerette (6), un diffuseur (11) formant entretoise appliqué par une de ses extrémités contre le diaphragme (6) et un support de diffuseur (14) en appui à une de ses extrémités contre l'extrémité du diffuseur (11) opposée au diaphragme (6) et comportant à son autre extrémité des pattes élastiques d'immobilisation (18) coopérant par enclenchement élastique avec un logement annulaire (22) ménagé dans l'élément de conduite.

## Description

La présente invention concerne les conduites d'adduction d'eau et se rapporte plus particulièrement aux bornes de puisage formant prises d'eau pour l'arrosage, pour les services de voirie, pour la fourniture d'eau sur les lieux publics tels que places de marché, pour la fourniture d'eau à des entreprises du bâtiment, de travaux publics ou autres, ainsi que pour les gens du voyage tels que forains ou analogues.

Les bornes de puisage connues comportent un ensemble de manoeuvre avec volant démontable, un ensemble de comptage de type proportionnel monté sur le corps de la borne, en regard d'un diaphragme pourvu d'un diffuseur, vissé dans un manchon du corps relié par des brides d'une part au pied et d'autre part à la tête de la borne.

La mise en place du diaphragme nécessite donc de réaliser le corps de la borne de puisage en au moins deux parties, ce qui en accroît le prix et rend son montage relativement complexe.

Par ailleurs, un tel agencement connu rend le démontage du diaphragme difficile après une période d'utilisation prolongée.

L'invention vise à remédier aux inconvénients des dispositifs connus en créant une conduite d'adduction d'eau pourvue d'un diaphragme et d'un diffuseur dont le montage et le démontage soient particulièrement aisés sans nécessiter de réaliser la conduite en plusieurs pièces pour la mise en place du diaphragme.

Elle a donc pour objet un dispositif de montage d'un diaphragme dans un élément de conduite d'adduction d'eau, caractérisé en ce qu'il comporte une collerette intérieure de réception du diaphragme ménagée à l'intérieur de l'élément de conduite, le diaphragme étant pourvu d'un rebord périphérique d'appui contre la collerette, un diffuseur formant entretoise appliqué par une de ses extrémités contre le diaphragme et un support de diffuseur en appui à une de ses extrémités contre l'extrémité du diffuseur opposée au diaphragme et comportant à son autre extrémité des pattes élastiques d'immobilisation coopérant par enclenchement élastique avec un logement annulaire ménagé dans l'élément de conduite.

L'invention a également pour objet un dispositif d'aménagement d'un élément de conduite d'adduction d'eau pour la réception d'un compteur de débit, caractérisé en ce qu'il comporte un diaphragme mis en place dans l'élément de conduite au moyen d'un dispositif de montage du type défini ci-dessus, et à l'extérieur de la conduite, en regard de l'emplacement du diaphragme, une pièce d'adaptation comprenant un canal d'admission, un canal d'évacuation qui communiquent respectivement avec des trous ménagés dans la paroi de l'élément de conduite de part et d'autre du diaphragme et qui sont destinés à former avec l'intérieur du compteur, une dérivation de mesure du débit et un canal de vidange communiquant avec un trou ménagé dans la paroi de l'élément de conduite et pourvu d'un clapet anti-retour destiné à permettre après la vidange de l'élément de canalisation, l'évacuation de l'eau retenue dans le compteur, la pièce d'adaptation comprenant un embout fileté de réception du compteur.

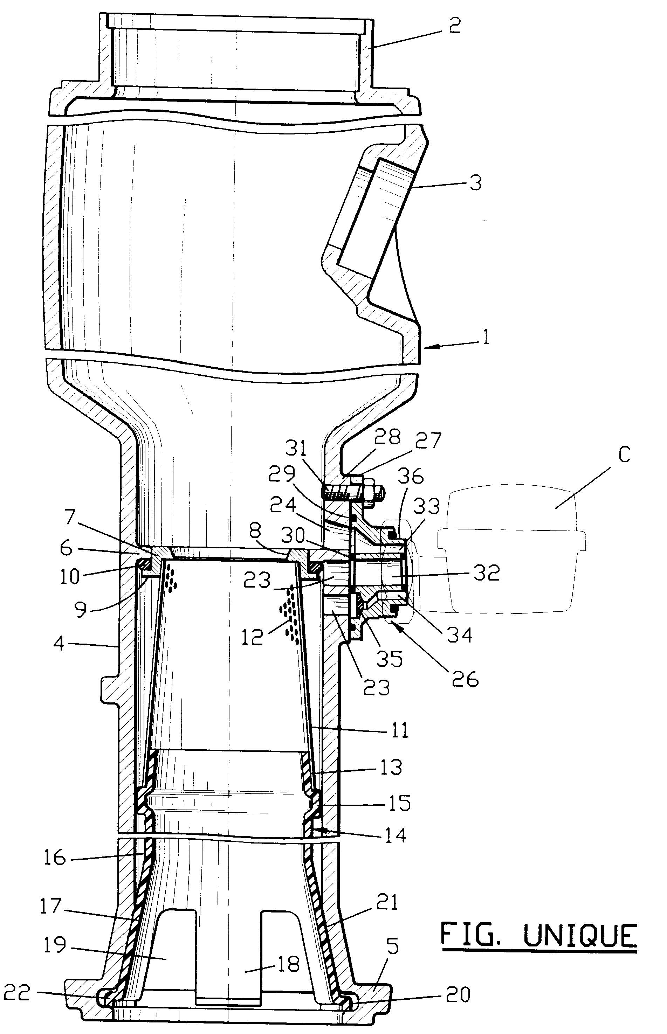

L'invention sera mieux comprise à l'aide de la description qui va suivre, donnée uniquement à titre d'exemple et faite en se référant au dessin annexé, sur lequel :
- la Fig. unique est une vue en élévation et en coupe d'un corps de tête de puisage pourvu d'un diaphragme monté à l'aide du dispositif de montage suivant l'invention.

Le corps de tête de puisage 1 représenté au dessin est la partie de la conduite de la tête de puisage disposée verticalement au-dessus du sol et destinée à recevoir à son extrémité supérieure 2 un ensemble de manoeuvre avec volant (non représenté).

Le corps 1 comporte en outre des sièges tels que le siège 3 d'axe oblique de réception de prises (non représentées) destinées à coopérer avec des embouts de raccordement de tuyaux souples par exemple.

Le corps 1 est prolongé vers le bas par un tronçon de conduite 4 de plus petit diamètre venu de matière et pourvu à son extrémité inférieure d'une bride 5 de raccordement à une canalisation d'alimentation en eau (non représentée).

Dans le tronçon de conduite 4 est ménagée à l'emplacement de réception d'un compteur C représenté en trait mixte, une collerette intérieure 6 venue de matière, de réception d'un diaphragme 7 pourvu d'un passage 8 de section déterminée.

Le diaphragme 7 comporte un rebord périphérique 9 au moyen duquel il prend appui contre la collerette 6 du tronçon de conduite 4, avec interposition d'un joint torique 10.

Le diaphragme 7 est appliqué contre la collerette 6 par un diffuseur ou crépine 11 de forme tronconique, pourvu de perforations 12 et prenant appui contre le diaphragme par sa petite base.

Dans la grande base de la crépine 11 est engagée l'extrémité tronconique complémentaire 13 d'un support tubulaire de diffuseur 14 réalisé par exemple en matière plastique.

Le support diffuseur 14 comporte successivement, à partir du diffuseur 11, l'extrémité tronconique 13, des portées 15 de centrage du support par rapport au tronçon de conduite 4.

Ces portées servent également de butées axiales pour l'extrémité correspondante du diffuseur 11.

Au-delà des portées 15, le support de diffuseur 14 comporte une portion cylindrique 16, puis une portion d'extrémité évasée 17 pourvue de pattes élastiques 18 délimitées par des échancrures 19 et destinées à coopérer élastiquement avec une gorge de réception 20 ménagée dans l'extrémité évasée 21 du tronçon de conduite 4 en regard de la bride 5 de celui-ci.

A cet effet, les extrémités des pattes 18 sont pourvues de bourrelets 22 en saillie vers l'extérieur et permettant un enclenchement élastique des extrémités des pattes 18 dans la gorge 20.

On comprendra que lors de la mise en place du diaphragme à l'aide du dispositif qui vient d'être décrit, la compression élastique du joint tronconique 10 interposé entre la collerette 6 et le rebord 9 du diaphragme oppose une réaction à l'effort axial de maintien exercé par le support de diffuseur dont les pattes 18 sont engagées dans la gorge 20 du tronçon de conduite 4 de sorte que le diaphrame est maintenu solidement.

Un tel agencement présente l'avantage d'un démontage très facile car il suffit pour retirer le diaphragme de dégager les pattes 18 du support de diffuseur pour libérer l'ensemble, l'élasticité du joint torique facilitant cette libération.

En se référant à nouveau au dessin, on voit que le corps de tête de puisage comporte de part et d'autre de l'emplacement du diaphragme 9 des trous 23,24 et 25 de mise en communication de la conduite avec le compteur C.

Le compteur C est monté sur le corps 1 par l'intermédiaire d'une pièce d'adaptation 26.

La pièce d'adaptation 26 est pourvue d'une embase 27 appliquée contre un bossage 28 du corps 1 avec interposition de joints toriques 29,30 et fixée à celui-ci par des goujons 31.

La pièce d'adaptation comporte un canal d'admission 32, un canal d'évacuation 33 qui communiquent respectivement avec les trous 23 et 24 et qui forment avec l'intérieur du compteur C une dérivation de mesure du débit de l'eau circulant dans la conduite et un canal de vidange 34 équipé du côté du trou 25 du corps 1 d'un clapet anti-retour 35 destiné à permettre, après la vidange de la tête de puisage, l'évacuation de toute l'eau retenue dans le compteur C afin d'empêcher toute détérioration du compteur due au gel.

Enfin, la pièce d'adaptation 26 est pourvue d'un embout fileté 36 dans lequel débouchent les canaux 32,33 et 34 et avec lequel est destiné à coopérer un écrou de fixation du compteur C.

On voit donc que l'agencement qui vient d'être décrit permet de réaliser une tête de puisage dont le corps est particulièrement bien adapté pour recevoir de façon simple et facile à démonter, un compteur de débit et les moyens de contrôle du débit dans la conduite auxquels le compteur est associé tout en améliorant l'étanchéité de la conduite et en simplifiant sa construction.

Dans le mode de réalisation qui vient d'être décrit, le diffuseur 11 et son support sont des pièces distinctes.

On peut cependant envisager de réaliser ces deux éléments en une seule pièce.

## Revendications

1. Dispositif de montage d'un diaphragme (7) dans un élément de conduite d'adduction d'eau (1), caractérisé en ce qu'il comporte une collerette intérieure (6) de réception du diaphragme (7) ménagée à l'intérieur de l'élément de conduite, le diaphragme étant pourvu d'un rebord périphérique (9) d'appui contre la collerette (6), un diffuseur (11) formant entretoise appliqué par une de ses extrémités contre le diaphragme (6) et un support de diffuseur (14) en appui à une de ses extrémités contre l'extrémité du diffuseur (11) opposée au diaphragme (6) et comportant à son autre extrémité des pattes élastiques d'immobilisation (18) coopérant par enclenchement élastique avec un logement annulaire (22) ménagé dans l'élément de conduite.

2. Dispositif de montage suivant la revendication 1, caractérisé en ce qu'entre le diaphragme (7) et la collerette (6) de l'élément de conduite est interposé un joint élastique (10) contribuant lors de sa compression par un effort axial exercé sur le support de diffuseur (14), à l'engagement par enclenchement élastique des pattes (18) du support de diffuseur (14) dans le logement annulaire (22) de l'élément de conduite.

3. Dispositif de montage suivant l'une des revendications 1 et 2, caractérisé en ce que le diffuseur (11) ayant une forme tronconique, le support de diffuseur (14) comporte une extrémité tronconique (13) engagée dans l'extrémité correspondante du diffuseur.

4. Dispositif de montage suivant l'une des revendications 1 et 2, caractérisé en ce que le support de diffuseur (14) comporte des portées (15) de centrage par rapport à l'élément de conduite, lesdites portées formant des butées axiales pour le diffuseur (11).

5. Dispositif de montage suivant l'une des revendications 1 à 3, caractérisé en ce que les pattes (18) du support de diffuseur (14) sont ménagées dans une partie tronconique (17) de celui-ci engagée dans une partie d'extrémité tronconique (21) correspondante de l'élément de conduite.

6. Dispositif de montage suivant l'une des revendications 1,2,4 et 5, caractérisé en ce que le diffuseur et le support de diffuseur sont réalisés en une seule pièce.

7. Dispositif d'aménagement d'un élément de conduite d'adduction d'eau pour la réception d'un compteur de débit (C), caractérisé en ce qu'il comporte un diaphragme (7) mis en place dans l'élément de conduite au moyen d'un dispositif de montage suivant l'une quelconque des revendications 1 à 5, et à l'extérieur de la conduite, en regard de l'emplacement du diaphragme (7), une pièce d'adaptation (26) comprenant un canal d'admission (32), un canal d'évacuation (33) qui communiquent respectivement avec des trous (23,24) ménagés dans la paroi de l'élément de conduite de part et d'autre du diaphragme (7) et qui sont destinés à former avec l'intérieur du compteur (C), une dérivation de mesure du débit et un canal de vidange (34) communiquant avec un trou (25) ménagé dans la paroi de l'élément de conduite et pourvu d'un clapet anti-retour (35) destiné à permettre après la vidange de l'élément de canalisation, l'évacuation de l'eau retenue dans le compteur, la pièce d'adaptation (26) comprenant un embout fileté (36) de réception du compteur (C).
